# EUROPEAN PATENT APPLICATION

(11) **EP 2 267 571 A1**
(43) Date of publication of application: **29.12.2010**
(21) Application number: 09003415.8
(22) Date of filing: 09.03.2009
(51) Int. Cl.: G05D 16/06, F16K 1/12

(54) **Differential pressure controller**

(71) Applicant: TA-Regulator, 8250 Brezice (SI)
(72) Inventor: Lah, Slavko, 8250 Brezice (SI)
(74) Representative: Townsend, Victoria Jayne

(57) **Abstract**

A differential pressure controller comprising; a wall (17, 23) defining a chamber, the chamber having an inlet end and an outlet end in axial alignment; a valve seat (19) and a valve plug (12,13,14,15) proportioned to fit the valve seat (19) arranged in axial alignment within the chamber and at least one of the valve seat (19) and valve plug (12,13,14,15) configured for axial movement towards the other when a pre-defined load from the inlet end is exceeded whereby to close the valve, resilient means (21) for resisting the axial movement when the pre defined load is not exceeded and a pilot valve (1,2,3,4,5,6,7) integrated into the wall (17, 23) of the chamber and in fluid communication with the chamber by means of one or more conduits (B, D, E) provided within the chamber wall (17, 23).

## Description

The present invention relates to pressure controllers used in the regulation of differential fluid pressures, for example (without limitation) in the risers and branches of heating and cooling systems used in various domestic and industrial applications.

Differential pressure controllers are known and various designs are available for use in a range of different applications controlling pressure of fluids over a variety of pressure ranges.

In-line differential pressure controllers are known for use in conduits of relatively small diameter. A typical example employs a plug valve whose seat is configured to move axially in-line with the flow of fluid whose pressure is being controlled. The seat may be actuated by a linear or rotational actuator. Known configurations of in-line differential pressure controllers have limitations in larger diameter conduits where higher pressure or higher flow feeds require much greater forces to preset the valve. A variety of alternative valve constructions are conventionally used for larger diameter conduits. Typically globe valves are used in such applications.

The use of pilot valves is known, these small valves control a limited flow feed to the separate, larger piloted valve, allowing the piloted valve to be operated at lower loads. Pilot valves are conventionally positioned externally of the body of piloted valve and are connected to the body by one or more impulse or "pressure signal" pipes which have an outlet into the main flow area of the piloted valve chamber.

The present invention seeks to provide a differential pressure controller which has application in a wide range of diameters and pressure ranges and in particular which has good performance in larger diameter conduit applications.

In accordance with the present invention there is provided a differential pressure controller comprising; a wall defining a chamber, the chamber having an inlet end and an outlet end in axial alignment; a valve seat and a valve plug proportioned to fit the valve seat arranged in axial alignment within the chamber and at least one of the valve seat and valve plug configured for axial movement towards the other when a pre-defined load from the inlet end is exceeded whereby to close the valve, resilient means for resisting the axial movement when the pre-defined load is not exceeded and a pilot valve integrated into the wall of the chamber and in fluid communication with the chamber by means of one or more conduits provided within the chamber wall.

Typically, the pre-defined load will be determined by a pressure signal from the pilot valve.

A further objective is to provide a user friendly adjustment means involving a simple low torque setting of a pilot valve and ease of the pilot valve change over.

In a particular embodiment, the valve seat is operated by an annular diaphragm positioned proximal to the inlet end and carried on the annular valve seat which extends distally and is arranged for axial movement towards the outlet end; the resilient means is a coiled spring arranged for resisting said axial movement of the annular diaphragm and valve seat and the valve plug is fixedly mounted proximal to the outlet end and in axial alignment with the annular diaphragm and valve seat. The spring characteristics match the pre-defined load.

The pilot valve is of conventional construction. The walls of the main valve chamber are prepared to receive the pilot valve by providing a recess in the wall proportioned to receive the pilot valve and incorporating pressure signal conduits (or impulse pipes) to connect the pilot valve with the chamber of the main valve through drillings defining channels and conduits in the chamber wall. Conveniently, the recess and pilot valve body may be provided with complementing screw threads to allow easy and secure installation of the pilot valve whilst maintaining ease of removal or replacement of the pilot valve when repairing / maintaining the controller.

Various modifications to the design can be envisaged without departing from the invention. For example, the valve may be arranged for the plug to move towards the seat and resilient means other than a coil spring may be employed to balance the movement of the valve plug.

The invention is advantageous in that hydronic resistance of the proposed in-line valve geometry is relatively low compared with globe valve geometry more conventionally used in larger scale applications. The valve can be made smaller compared to conventional globe valve arrangements bringing benefits such as lower manufacturing cost, easier and quicker installation and provides a more space efficient installation for the end user. Also, the noise characteristics (due to velocity induced cavitations) of the proposed in-line valve have been found to be better than valves conventionally used when compared under the same conditions.

By integrating the pilot valve and pressure signal conduits (or impulse pipes) into the wall of chamber of the main valve, the controller is made easier to transport, store, install, assemble, maintain and repair. The integrated design protects the pilot valve from damage during transport and installation of the controller.

One embodiment of the invention will now be further described by way of example with reference to the following figures in which:
Figure 1 shows an embodiment of a differential pressure controller in accordance with the invention in cross section through the axis of the main and pilot valve.
Figure 2 shows a schematic of the operation of the controller of Figure 1.

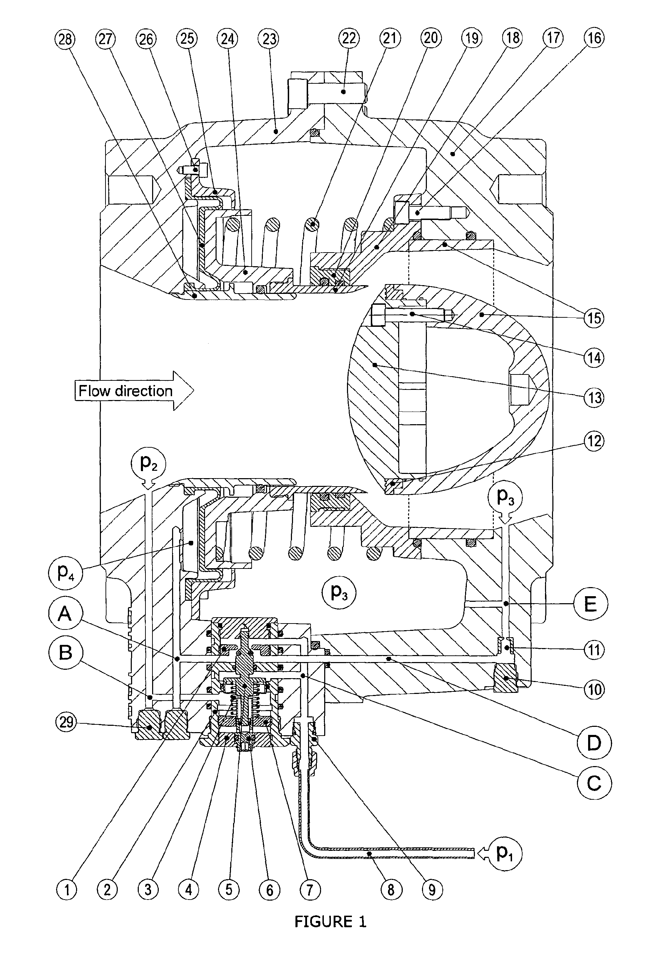

As can be seen from Figure 1, the differential pressure controller consists of a main valve having in-line geometry and a pilot valve integrated in the wall of the main valve chamber, the pilot valve having conventional valve geometry.

The main valve body consists of a chamber defined by a two part wall, an inlet chamber wall portion (23) and an outlet chamber wall portion (17). The chamber wall is assembled together by a number of fasteners (for example bolts or screws) (22) placed along flanges provided on cooperating end surfaces of the inlet and outlet chamber walls (23, 17). Each of the chamber wall portions (23, 17) have blind holes with threads that are used for installing the valve between flanges on a pipeline. Both chamber wall portions include various drillings that enable pressures to be transmitted to various points inside the valve, installing a throttle (11), connecting an external impulse pipe, and also for venting of the chamber and installing pressure measurement points.

Centred inside the chamber proximal to the outlet end is a star shaped valve plug that consists of a central body (15) held in place on the axial centreline by a number of valves to an outside annulus, a seal (12) and a cover plate (13) assembled together by number of screws (14). The body (15) is held in place by a ring (18) that is fixed to the outlet chamber wall portion (17) by a number of screws (16).

Positioned in the chamber proximal to the inlet end of the chamber there is an annular diaphragm (27). The outer edge of the diaphragm (27) is fixed to the inlet chamber wall portion (23) by a diaphragm ring (25) and number of screws (26), whilst the inner edge of the diaphragm is fixed to the inlet chamber wall portion (17) by a funnel (28).

Inside the main valve body is a valve seat (19) that is screwed into a disc (24). Together the valve seat (19) and disc (24) are moved axially along the chamber under influence of a differential pressure on the diaphragm (27) and the force of a main spring (21). Moving parts are guided by the funnel (28) and a guide (20).

The pilot valve consists of a pilot body (2), a pilot piston (5), a pilot seat (1), a pilot cover (4), a pilot spring (3), an adjustment spindle (6) and a pilot spring bracket (7). The pilot piston (5) moves inside the pilot under influence of differential pressure on the piston (5) and the force of the pilot spring (3).

A plurality of O-rings provides sealing between various components inside the valve.

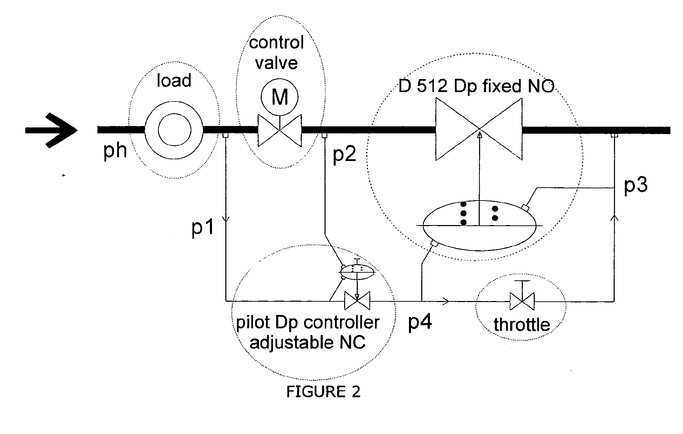

Now with reference to Figure 2 and Figure 1, in use, the differential pressure controller is installed in the return pipe of a hydronic system. Its function is to control differential pressure between two points (p1, p2) of the system, typically across a control valve (M) which is upstream of the controller. The first point (p1) is upstream of the control valve (M) and the second point (p2) is just upstream, embodied within the inlet of the differential pressure controller. The pressure at the first point (p1) is transmitted via an external impulse pipe (8), impulse pipe connection (9) and internal drilling (C) to the main valve chamber in the region above the pilot piston (5) and also to the pilot valve inlet. The pressure at the second point (p2) is transmitted from the main valve inlet via an internal drilled conduit (B) to a chamber below the pilot piston (5). Pressure from pilot valve outlet (p4) is transmitted via an internal drilled conduit (A) to the chamber on the inlet side of the main valve diaphragm (27) and through an internal drilling (D) to a throttle (11). The pressure (p3) downstream of the throttle is transmitted via an internal drilled conduit (E) to the main valve outlet and also to the chamber on the outlet side of main valve diaphragm (27).

When the controller is in equilibrium, differential pressure p1 - p2, multiplied by the pilot piston (5) surface area is equal to the pilot spring (3) force, the pilot valve is stationary. The differential pressure p4 - p3, multiplied by the diaphragm (27) surface area is equal to main spring (21) force and the main valve is stationary. There is an equilibrium flow through the main valve, and also (much smaller due to relative sizes) equilibrium flow through the pilot valve.

If differential pressure p1 - p2 increases (due to increased flow or due to the control valve closing), the pilot valve opens decreasing its resistance and increasing the flow through the pilot. Due to increased flow through the pilot valve, pressure drop across the throttle (11) increases, therefore the pressure at p4 increases. Now the main valve is not in equilibrium anymore and it starts to close. Both valves are active until new equilibrium has been reached.

If differential pressure p1 - p2 decreases (for example, due to a decrease in flow rate or opening of the main valve), the pilot valve closes, increasing its resistance and decreasing the flow through the pilot. As a consequence of decreased flow through the pilot valve, the pressure drop across the throttle (11) decreases and pressure at p4 decreases. The main valve is no longer in equilibrium and starts to open. Both the main valve and the pilot valve are active until equilibrium is again reached.

When the controller is in equilibrium, the controlled differential pressure (p1 - p2) is equal to pilot spring (3) force divided by the pilot piston (5) surface area. From this it is clear that differential pressure in the main valve chamber can be adjusted by adjusting the pilot spring (3) force. This can be achieved by operation of an adjustment spindle (6) and pilot spring bracket (7). An adjustment screw and console are locked by hexagonal surfaces such that when adjustment spindle (6) is turned, the pilot spring bracket (7) also turns and it travels along the thread in pilot body (2) compressing or decompressing the pilot spring (3) as required.

## Claims

1. A differential pressure controller comprising; a wall (17, 23) defining a chamber, the chamber having an inlet end and an outlet end in axial alignment; a valve seat (19) and a valve plug (12,13,14,15) proportioned to fit the valve seat (19) arranged in axial alignment within the chamber and at least one of the valve seat (19) and valve plug (12,13,14,15) configured for axial movement towards the other when a pre-defined load from the inlet end is exceeded whereby to close the valve, resilient means (21) for resisting the axial movement when the pre-defined load is not exceeded and a pilot valve (1,2,3,4,5,6,7) integrated into the wall of the chamber and in fluid communication with the chamber by means of one or more conduits provided within the chamber wall (17, 23).

2. A differential pressure controller as claimed in claim 1 wherein the valve seat (19) is operated by an annular diaphragm (27) positioned proximal to the inlet end and carried on the annular valve seat (19) which extends distally and is arranged for axial movement towards the outlet end; the resilient means is a coiled spring (21) arranged for resisting said axial movement of the annular diaphragm (27) and valve seat (19) and the valve plug is fixedly mounted proximal to the outlet end and in axial alignment with the annular diaphragm (27) and valve seat (19).

3. A differential pressure controller as claimed in claim 1 or claim 2 wherein the wall (17, 23) of the valve chamber receives the pilot valve (1,2,3,4,5,6,7) in a suitably proportioned recess.

4. A differential pressure controller as claimed in claim 3 wherein the recess and pilot valve body (1,2,3,4,5,6,7) are provided with complementing screw threads to allow easy and secure installation of the pilot valve whilst maintaining ease of removal or replacement of the pilot valve when repairing or maintaining the controller.

5. A differential pressure controller as claimed in any of claims 2, 3 or 4 wherein the valve plug (12,13,14,15) is star shaped.

6. A differential pressure controller as claimed in any preceding claim wherein the pilot valve (1,2,3,4,5,6,7) includes an adjustment mechanism (6,7) for adjusting compression on a spring (3) in the pilot valve.

7. A differential pressure controller as claimed in any preceding claim further including a throttle (11) positioned in the chamber wall (17, 23) downstream of but in fluid communication with the pilot valve (1,2,3,4,5,6,7).

8. A differential pressure controller as claimed in claim 1 wherein the valve is arranged for the plug (12, 13, 14, 15) to move towards the seat (19).

9. A pipe fitted with a differential pressure controller as claimed in any preceding claim.

10. A hydronic system including a return pipe as claimed in claim 9.

11. A hydronic system as claimed in claim 10 further including a control valve (M) positioned upstream of the pilot valve (1, 2, 3, 4, 5, 6, 7).
